# EUROPEAN PATENT APPLICATION

(11) **EP 2 296 327 A1**
(43) Date of publication of application: **16.03.2011**
(21) Application number: 10176038.7
(22) Date of filing: 09.09.2010
(51) Int. Cl.: H04L 12/58

(54) **Automatic integration of a mail server with internet server (IS)**

(30) Priority: 10.09.2009 US 241042 P
(71) Applicant: Research in Motion Limited, Waterloo, Ontario N2L 3W8 (CA)
(72) Inventor: Virk Sarinder, Bellevue, WA 98008 (US); Hable, Daniel T, Bellevue, WA 98008 (US); Hanson, David J, Bellevue, WA 98008 (US); Hathcock, Arvel, Grapevine, TX 76051 (US)
(74) Representative: Roberts, Gwilym Vaughan

(57) **Abstract**

A communications system includes a network engine that communicates with a plurality of user subscribed mobile wireless communications devices via a communications network and configured to send and receive emails therefrom. A direct access server is operative with the network engine and comprises at least one module configured to identify a particular server during an account integration process (98b) and to query the particular mail server using a command that is supported by the particular mail server (98c) and receive from the particular mail server configuration parameters (98d). A database stores returned configuration parameters (98e) used to subscribe to the server.

## Description

### Related Application(s)

This application claims priority to U.S. provisional application Serial No. 61/241,042, filed September 10, 2009**,** the disclosure which is hereby incorporated by reference in its entirety.

### Field of the Invention

This disclosure relates to the field of communications systems, and, more particularly, to electronic mail (email) communications systems and related methods.

### Background

Electronic mail (email) has become an integral part of business and personal communications. As such, many users have multiple email accounts for work and home use. Moreover, with the increased availability of mobile cellular and wireless local area network (LAN) devices that can send and receive emails, many users wirelessly access emails from mailboxes stored on different email storage servers (e.g., corporate email storage server, Yahoo, Hotmail, AOL, etc.).

Yet, email distribution and synchronization across multiple mailboxes and over wireless networks can be quite challenging, particularly when this is done on a large scale for numerous users. For example, different email accounts may be configured differently and with non-uniform access criteria. Moreover, as emails are received at the wireless communications device, copies of the emails may still be present in the original mailboxes, which can make it difficult for users to keep their email organized.

One particularly advantageous "push" type email distribution and synchronization system is disclosed in U.S. Patent No. 6,779,019 to Mousseau et al., which is assigned to the present Assignee and is hereby incorporated herein by reference. This system pushes user-selected data items from a host system to a user's mobile wireless communications device upon detecting the occurrence of one or more user-defined event triggers. The user may then move (or file) the data items to a particular folder within a folder hierarchy stored in the mobile wireless communications device, or may execute some other system operation on a data item. Software operating at the device and the host system then synchronizes the folder hierarchy of the device with a folder hierarchy of the host system, and any actions executed on the data items at the device are then automatically replicated on the same data items stored at the host system, thus eliminating the need for the user to manually replicate actions at the host system that have been executed at the mobile wireless communications device.

The foregoing system advantageously provides great convenience to users of wireless email communication devices for organizing and managing their email messages. Yet, further convenience and efficiency features may be desired in email distribution and synchronization systems as email usage continues to grow in popularity.

### Summary

A communications system includes a network engine that communicates with the plurality of user subscribed mobile wireless communications devices (also referred to herein as mobile devices) via a communications network and configured to send and receive electronic mail therefrom. A direct access server includes a processor and is operative with the network engine. At least one module is configured to identify a particular mail server during an account integration process and to query the particular mail server using a command that is supported by the particular mail server and returned configuration parameters. A database stores the returned configuration parameters and they are used to subscribe to the particular mail server. In example embodiments disclosed herein, the particular mail server is an IMAP (Internet Message Access Protocol) server and the command is an IMAP command. However, in other example embodiments, the particular mail server can be any type of mail server, such as an MDaemon, POP (Post Office Protocol or any version of POP such as POP3), Lotus Notes, Microsoft Exchange, Yahoo Mail, or Gmail server and the command is a command that is supported by that type of server. Accordingly, for example, if the particular mail server is a POP server, the command is a POP command.

In another example, the direct access server is configured to poll the particular mail server when it receives a notification from the particular mail server that new electronic mail has arrived. The direct access server is configured to log into the particular mail server when it receives a notification from the particular mail server that electronic mail is waiting to be received from the particular mail server. If the direct access server does not receive any notification, the direct access server is configured to poll the particular mail server only after a predetermined time.

In another example, the direct access server is configured to receive Simple Mail Transfer Protocol (SMTP) server information related to the particular mail server. In another example, any message from handheld (MFH) electronic mail as received and later sent from the network engine will appear to be from the particular mail server when received by a recipient. In yet another example, an application programming interface is associated with a particular mail server and configured to receive user data when information regarding the particular mail server needs to change. The direct access server is configured to change periodically a non-mail job that refreshes information in the database. The direct access server in another example is configured to enable a last updated time stamp. The processor in another example is configured to receive values on every poll or every "n" polls.

A method aspect is also set forth.

### Brief Description of the Drawing

Other objects, features and advantages will become apparent from the detailed description which follows when considered in light of the accompanying drawings in which:

FIG. 1 is a schematic block diagram of a direct access electronic mail (email) distribution and synchronization system in accordance with non-limiting examples that can be used for the automatic integration of the particular mail server in accordance with a non-limiting example.

FIG. 1A is an example high-level flowchart showing a sequence of steps in accordance with a non-limiting example.

FIG. 2 is a block diagram of an example embodiment of a mobile device that can be used in accordance with non-limiting aspects.

FIG. 3 is a block diagram of an example embodiment of a communication subsystem component of the mobile device of FIG. 2.

FIG. 4 is an example block diagram of a node of a wireless network.

FIG. 5 is a block diagram illustrating components of a host system in one example configuration for use with the wireless network of FIG. 4 and the mobile device of FIG. 2.

### Detailed Description

Different embodiments will now be described more fully hereinafter with reference to the accompanying drawings, in which example embodiments are shown. Many different forms can be set forth and described embodiments should not be construed as limited to the embodiments set forth herein. Rather, these embodiments are provided so that this disclosure will be thorough and complete, and will fully convey the scope to those skilled in the art. Like numbers refer to like elements throughout.

Currently when an Internet Service (IS) that is associated with a "push" type mail system polls a mail server for emails, the Internet Service polls the mail server after a predetermined amount of time, such as every fifteen (15) minutes and often finds there is no mail. With each poll, network bandwidth and processing resources are used.

In accordance with a non-limiting example, the system creates a way for the IS to configure notifications for a particular mail server on an automatic basis. IS learns the applicable parameters and moves them into a data table and uses this information to subscribe instantaneously for notifications from the server.

Instead of the IS polling the particular mail server after a predetermined amount of time, such as every 15 minutes, notifications are now sent from the particular mail server to the IS, which polls when it receives a notification from the mail server that new mail has arrived. As a result, IS expends its resources to log into the mail server only when IS, by a notification from the mail server, has assurance that mail is waiting to be retrieved from the particular mail server. If IS does not get a notification, IS will not poll, with the exception of a fall-back of polling after a predetermined amount of time, such as every six hours.

The system provides a method by which a particular mail server can provide the IS with enough information to integrate with IS. After integration of the particular mail server with IS, the mail server and associated device users will be able to receive all IS services, e.g., mailbox polling, MTH (message to handheld), MFH (message from handheld), and various other function that other providers (e.g., Gmail, Yahoo) receive. The system uses a command which shall be referred to herein as the X-RIM command. With the command, a conversation occurs between the IS and the mail server. The mail server provides to IS all of the necessary information required to make a tight integration between IS and the mail server, and thus, establish a subscription for notifications from the mail server to IS.

Additions to the system relate to refreshing the data which the mail server provided to IS through the X-RIM command:

1) Provide an external Application Programming Interface (API) for the mail server to contact IS when information needs to change;

2) Compare values on every poll or every "n" polls with information retrieved from IS;

3) Have IS periodically schedule a non-mail job that refreshes the information in its database; and

4) Extend the X-RIM command to enable a last updated timestamp (similar to the HWM concept for mail).

Organizations using the particular mail server can offer their device users the notification service level, which is an enhanced experience for their users. Thus, a vendor can sell this as a value-added capability to prospective purchasers of their particular mail server.

A primary market is small businesses and the integration between IS and the particular mail servers can position the system as a provider of push email and PIM (Protocol Independent Multicast) notifications even to corporate markets, which may not be as open to the expense and overhead of an enterprise server (ES) solution.

The system creates a way to configure notifications for a particular mail server on an automatic basis. The system adds the prevailing applicable parameters into a data table and uses this information to quickly subscribe for notifications from that server. This reduces unnecessary polling and increases functionality to customers by enabling push email and PIM notification. For businesses not large enough to have their own enterprise server, this is an important feature.

The system allows the particular mail server to provide IS with enough information to build an email integration, which leverages the notification and expedited polling. Behavior of the polling, MTH, MFH, and related functions are the same as they are for other providers (e.g., Gmail, Yahoo). An additional command is listed in the server capability line. Upon executing the new command, the server responds with all of the necessary information required to make a tight integration with the server.

New and existing service customers using the particular mail server will gain push and PIM notifications. There is minimal impact to the system beyond increased traffic loads. System behavior for the particular mail server is the same as for other mail providers.

A server indicates that it supports the specialized X-RIM command in the capability results. If it is not listed in the capabilities of the server, then IS will not issue the command. The X-RIM command is only valid after a successful login to the mailbox. There now follows examples of code implementations in accordance with non-limiting examples. An example of a typical IMAP conversation would be:

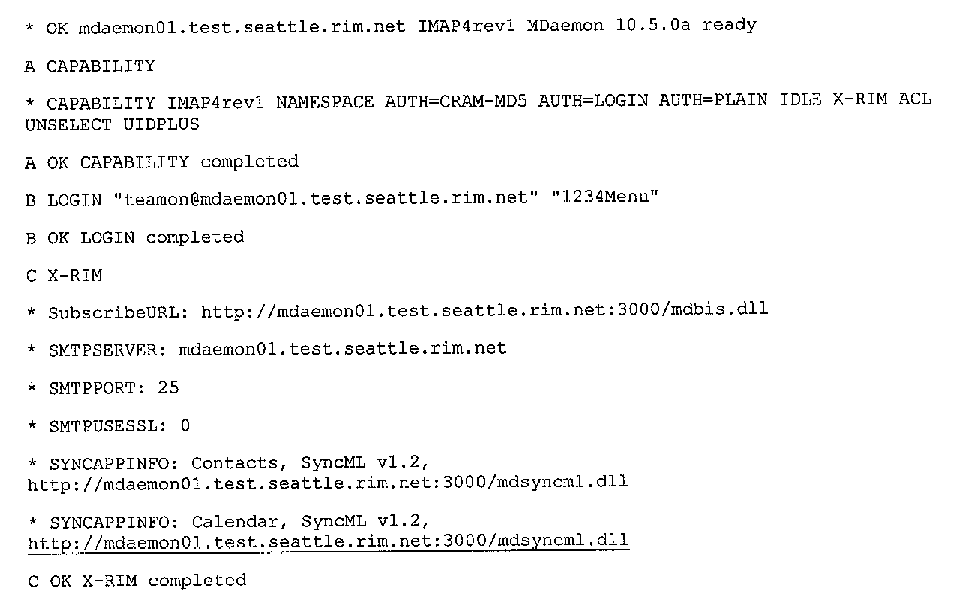

The fields of the X-RIM command are defined below:

| **X-RIM Field** | **Description** |
|---|---|
| SubscribeURL | This is the URL to send notification subscribe and unsubscribe requests to. |
| SMTPSERVER | This is the host name of the server that will handle SMTP traffic on MFH operations. |
| SMTPPORT | This is the port that will listen for SMTP traffic on MFH operations. |
| SMTPUSESSL | Indicates whether BIS should attempt to use an SSL connection or try a non-SSL connection. Values: 0 = non-SSL 1 = SSL |
| SYNCAPPINFO | This contains information required to connect via a specific protocol to an end point for synchronization support. The values contains a string with the following format: <Sync Data Type>, <Sync Protocol>, <Sync URI> |

There are no changes to the request that the engine servlet accepts from SOAP to validate the sources. If the engine servlet notices that X-RIM is listed on the capability response for a host, then a request will be made for the X-RIM information. This response will appear as follows:

```
 <?xml version="1.0" encoding="UTF-8"?>
 <batch>
  <downloadResults>
    <result id="1">
      <serverCfg>
        <SMTPSERVER>mdaemon01.test.seattle.rim.net</SMTPSERVER>
        <SMTPPORT>25</SMTPPORT>
        <SMTPUSESSL>plain</SMTPUSESSL>
        <Contacts>SyncML v1.2,
 http://mdaemon01.test.seattle.rim.net:3000/mdsyncml.dll</Contacts>
        <Calendar>SyncML v1.2,
 http://mdaemon01.test.seattle.rim.net:3000/mdsyncml.dll</Calendar>
 <SubscribeURL>http://mdaemon01.test.seattle.rim.net:3000/mdbis.dll</SubscribeORL>
      </serverCfg>
      <success/>
    </result>
  </downloadResults>
  <health metric="100">
    <files MaxFiles="0" OpenFiles="0"/>
    <memory SwapFree="0" SwapTotal="0"/>
    <loadavg LastMinute="0.0"/>
  </health>
 </batch>
```

For sources being verified by the engine servlet that do not support the X-RIM command they will appear as they currently appear from the engine servlet.

```
 <?xml version="1.0" encoding="UTF-8"?>
 <batch>
  <downloadResults>
    <result id="1">
      <success/>
    </result>
  </downloadResults>
  <health metric="100">
    <files MaxFiles="0" OpenFiles="0"/>
    <memory SwapFree="0" SwapTotal="0"/>
    <loadavg LastMinute="0.0"/>
  </health>
 </batch>
 </batch>
```

The changes in SOAP can be broken down into three parts: 1) source creation changes; 2) subscription changes; and 3) SMTP changes. After the validation results are returned from the engine servlet, SOAP will continue to create a source as it currently does. If the engine servlet returns additional enhanced integration information, SOAP performs additional steps:

1) The "is notifiable" bit in the source settings is set to true; and

2) The enhanced integration information is stored in the database and tied to the srcmbox record.

The following pseudocode describes how the subscription code will retrieve the notification provider information from the enhanced integration table.

```
 if (server,protocol) match in NotificationProviderCache:
    retrieve NotificationProvider object from cache
 else:
    load srcmbox object;
    create NotificationProvider object with values (subscribe URL = url from
 sources, protocol = "IMAP", type = "HTTP", auth = "NONE")
 end if
 compose opaque data; // this is the same as before
 send notification;
 record subscription to db;
 return subscription id;
```

Entries in the notification provider table will override the entries on the source. The method described above avoids changing the method signature of the subscription methods and avoids a query to the central database and then to the partition database for 95 to 99 percent of the code flow.

The SMTP host, port and SSL information are used by the DA when it sends a message through the UP on MFH operations. The SrcMbox "get" methods for SMTP information will return the enhanced integration override values instead of the values stored in the srcmbox table. This causes the DA provider object to populate itself with the correct SMTP information without making any code path adjustments.

No new tables or stored procedures will be added to either the central database or the partition databases. The configuration parameters that are obtained from the MDaemon server will be added to the SrcMbox row created as a result of the source integration.

| **NEW ScrMbox Columns** | | |
|---|---|---|
| New Column Name | Type | Description |
| SUBSCRIBEURL | VARCHAR (255) | The subscription url |
| SMTPHOST | VARCHAR (255) | SMTP host name |
| SMTPPORT | NUMBER (10,0) | SMTP port |
| ABSYNCPROTOCOL | VARCHAR (8) | |
| ABSYNCURL | VARCHAR (255) | The contact sync endpoint url |
| CALSYNCPROTOCOL | VARCHAR (8) | |
| CALSYNCURL | VARCHAR (255) | The calendar sync endpoint url |

In addition to the fields appended above, two bits will be reserved in the SETTINGS2 column of SrcMbox. These bits are defined as follows:

1) Is Enhanced Integration Enabled - Set to true for any source that is communicating with a mail server that supports the X-RIM method for configuring SMTP values and subscription URL.

2) SMTP Use SSL - Set to true if the SMTP server should default to use SSL. For servers that indicate they support SSL, IS will use SSL communication. For servers that do not indicate they support SSL, the STARTTLS extension defined in RFC 2487 (the disclosure which is hereby incorporated by reference in its entirety) will be enabled and IS will allow the server to negotiate an encrypted connection if the server supports it.

The following stored procedures are updated to return these new fields or accept the new fields as parameters:

1) sSrcMbox - returns the data values for the new fields; and

2) iSrcMbox - accepts new parameters to write to the table.

AggEngine Servlet Configuration: If set to true, the IMAP implementation will identify and query servers that support the X-RIM capability. Default is true.

SOAP Servlet Configuration: If set to true, SOAP will attempt to look at the SrcMbox record for a subscribe URL if one cannot be found in the notification provider table. Default is false.

AggEngine Servlet and SOAP Servlet can be changed at run time using the servlet management port. There are no changes to existing monitoring points or new monitoring points.

The implementation does not store any enable bits on the source or in the service book. As a result, no data migration is required. Once data refreshing is enabled, sources that currently subscribe to the enhanced integration but are not enabled in IS will be refreshed and reverted to standard IMAP accounts on the next refresh.

Information in the database is kept up-to-date. It is possible to provide an external API for the server to contact the IS when information needs to change, compare values on every poll or every n polls with information retrieved from UP, have the direct access server periodically schedule a non-mail job that refreshes the information in the database, and extend the X-RIM command to enable a last updated timestamp (similar to the HWM concept for mail).

The X-RIM command will result in the particular mail server returning parameters useful for future enhancements such as calendar or PIM sync. The particular mail server is used often by small businesses and now with the new system configures notifications for an particular mail server on an automatic basis. The system learns the applicable parameters into a data table and will use this information to "instantaneously" subscribe for notifications from that server. This has benefits.

When the system polls, it polls the mail server after a predetermined amount of time, such as every 15 minutes, and often finds there is no mail. This is a waste of network bandwidth and processing resources. With notifications, the system only goes when it receives a notification that new mail has arrived. Thus, it will only expand the resources to log into the server when it has assurance that mail is waiting to be retrieved. If it does not get a notification, it will not poll except every after a predetermined amount of time, such as six hours, as a fall-back.

Another benefit is that organizations using the particular mail server can offer their users the notification service level, which is an enhanced experience for their users. Thus, the service can sell this as a value-add capability to prospective purchasers of their product.

Another benefit is to the primary market of small businesses. This can position the system as a provider of "push" email and PIM notifications even to corporate markets, which may not be as open to the expense and overhead of an enterprise server solution.

In the past systems, IS has no way to get the required information from the mail server installations (MDaemon) and that data is not known cannot be gathered ahead of time. The system makes changes in IS (to the IMAP code, and other functions as necessary) to automatically detect that a server supports this additional data, and to gather and use that data automatically, including data such as subscription URL, smtp server info, syncapp information, and similar items. Currently this type of data must all be known prior to any such partner integration and manually entered in the IS database. A benefit is auto-discovery of required configuration data.

IS identifies a particular mail server since the new IMAP command will be supported only by those servers. IS captures the parameters to use in a subscription request. IS uses the configuration parameters from the mail server to submit a subscribe-to-notifications request. IS uses the configuration parameters to configure the SMTP server for messages the user sends from the device rather than using the IS default SMTP servers. An initial implementation does not include notification to IS of changes to metadata information for a message that has already been delivered to the device, but it could in another embodiment.

In the past systems when the system sets up an ISP for notifications, it manually pre-configures a database with various parameters. The system gets this information in advance from the ISP. This has been accomplished for a relatively small number of such partners. There are currently around 10-12 ISP's that have set up in this manner.

In the new system as described, it identifies a particular mail server during the capabilities exchange after connecting to the mail server. For IMAP servers identified as the particular mail server installations, the system issues the custom IMAP command (X-RIM). The server returns the necessary configuration parameters, which are automatically added to a database and used to subscribe to the server.

The system will white-list IS servers so that the custom IMAP command will be exposed to IS during capability exchange, but will not expose the command to servers from other IP ranges. The system will not negatively impact the user integration experience, nor will it negatively impact other IMAP mail or PIM providers. If a user has already integrated a source, the user deletes the integration and reintegrates in order to receive notifications through this feature.

IS attempts to identify whether an IMAP server is the particular mail server (an MDaemon server in one example) during the account integration process. When IS identifies a particular mail server, IS queries the server for configuration parameters. IS uses data returned in the configuration parameters to set up the account integration with the mail server. If the "subscribeurl" is returned with the configuration parameters, IS uses this information to submit a "subscription for notifications" request to the particular mail server. If sufficient SMTP server information is returned with the configuration parameters, IS uses this information for MFH messages for the account being integrated.

If sufficient data is received to implement part of this functionality, but not to implement the entire functionality for a given integration attempt, IS implements as much as possible of the functionality based on the data received with the configuration parameters. If, for instance, the subscribeurl is received but insufficient SMTP server information is supplied, IS submits the subscription request. Each piece of functionality is viewed as implementable separately from the others, rather than as "all or nothing."

If an error condition prevents any part of the functionality from being fully implemented, IS sets up that portion of the account integration as it normally would in the case of a non-server installation. For instance, if the query for configuration parameters fails, or if the data returned is lacking required information for some piece of the functionality, IS does not interrupt the account integration process or return error messages. That portion of the functionality is set up as it would for a generic IMAP server: polling rather than notifications, uses the default IS SMTP server for MFH and other functions.

IS allows an IS administrator to turn off the functionality without having to restart a component. It is possible to turn off two distinct parts of this functionality separately: discovery of the configuration and the subscribe/unsubscribe functionality.

IS supports the ability to deploy the individual features in this work package in the OFF state by plan. IS supports the ability to turn the individual features in this work package on or off by plan. IS supports rollback of this feature from the deployed release to the previous release. In case of a rollback, IS effects the rollback in such a way that the system is not negatively affected in performance or other measures. In case of a rollback, IS effects the rollback in such a way that the user experience is not significantly degraded from what it was before the new system was launched. IS supports back-out of this feature from the deployed release to the previous release.

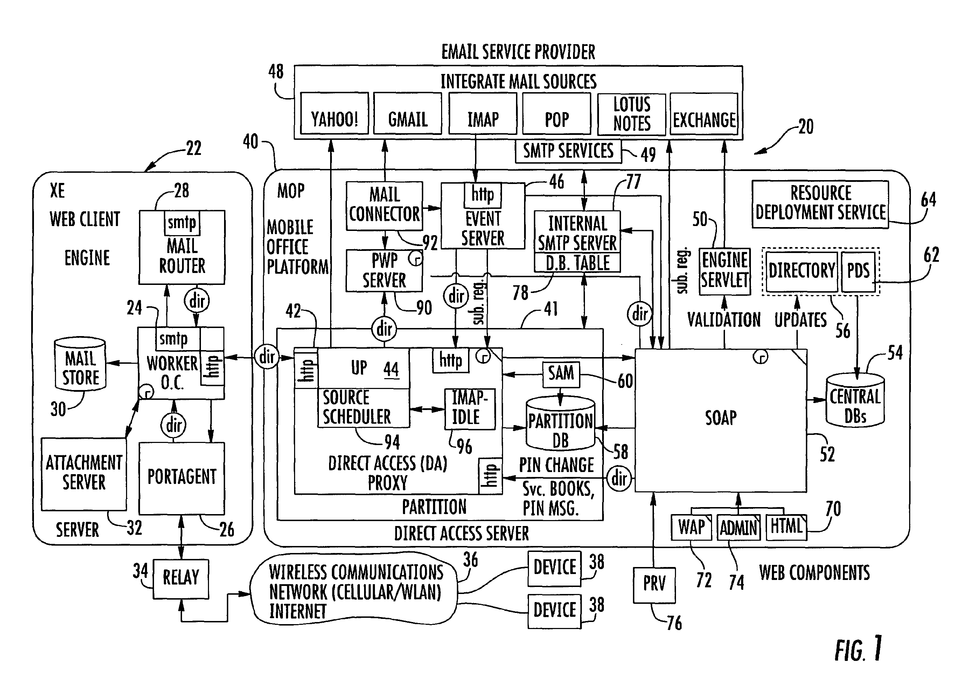

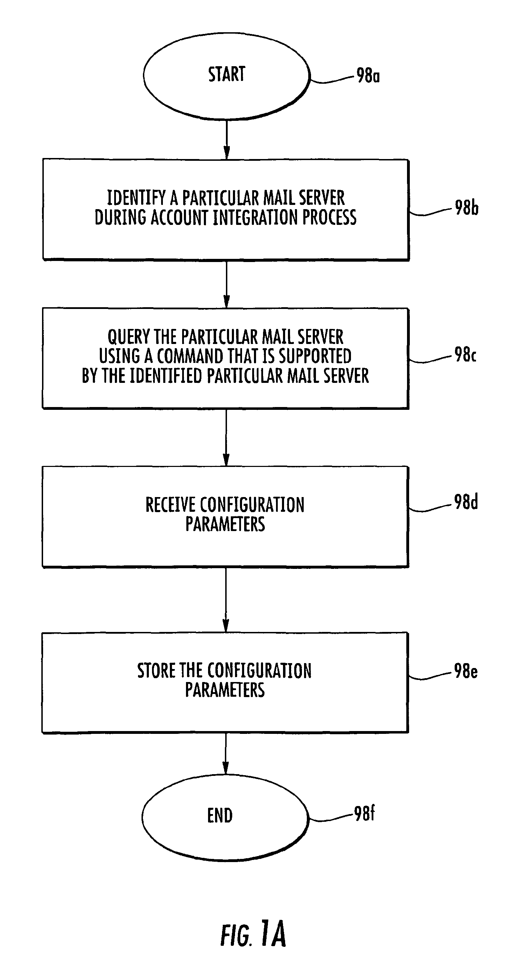

Basic components of the Direct Access email system **20** to which the new system as described can be applied are shown in FIG. 1. In an example embodiment, the Direct Access email system **20** includes a server (referred to herein as a direct access server) that includes a processor. The direct access server is operative with the network engine **22** of FIG. 1. The web client or network engine **22** has various components. The worker **24** is a processing agent that is responsible for most processing in the engine **22** and includes SMTP and HTTP server support. It determines out-of-coverage information (O.C.) as explained later. It accepts email from the DA proxy and external mail routers, formats email in CMIME, and sends it to the port agent **26** and other components. The port agent **26** acts as a transport layer between the email system infrastructure and the rest of the engine **22.** The mail router **28** is an MTA (Mail Transfer Agent) and is responsible for relaying messages into the mail store **30,** which are destined for hosted subscribers. It is also responsible for accepting/relaying email notifications.

The mail store **30** is a MIME message store that resides on a central storage system to provide support for more/forward/reply and attachment viewing features. The attachment server **32** provides service for documents/attachment conversion requests from workers.

The symbol "dir" that is attached to a line illustrates that a directory lookup has been made to determine the service instance to call, for example, which the DA proxy can retrieve an email for a particular pin/servicebook. The symbol "r" attached to a component illustrates that it registers itself with a directory of PDS. The triangular attachment on the WAP and HTML components illustrates that it is a client of a Resource Deployment Service.

The Relay **34** with the Wireless Communications Network **36,** such as a cellular network or WLAN and cooperates with a Port Agent **26** using GUID. The Network **36** communicates with one or more wireless communications devices **38,** such as portable wireless communications devices.

The mobile office platform **40** has different components and includes the partition **41.** The DA proxy (DA) **42** includes service through which integrated source messages are delivered to or retrieved from by the worker **24.** It is responsible for polling sources such as mailboxes, processing source notifications and retrieval and update of source messages via the universal proxy **44.** The universal proxy (UP) **44** abstracts access to disparate mail stores into a common protocol. The event server **46** is a lightweight process on a server that receives notifications from external sources (ISPs and SMC) and different user mailboxes and processes them asynchronously without blocking the sender of notifications. The integrated mail sources **48** are email service providers include non-limiting examples such as Yahoo!, Gmail, IMAP, POP, Lotus Notes, and Exchange. In an example embodiment, an integrated mail source is a mail server which is identified as a particular mail server during an account integration process and is queried by the direct access server using a command that is supported by the particular mail server. In response to the query by the direct access server, the direct access server receives from the particular mail server configuration parameters, which are stored in a database and are used to subscribe to the particular mail server. SMTP servers **49** are associated with the email service providers as explained in greater detail below. The engine servlet **50** is a high performance service on the server capable of validating a large number of integrated sources concurrently. This engine **50** is used in a source integration process to validate the access settings to a mailbox. The SOAP **52** is a primary interface to query, update and modify data in the central and partition databases **54, 58.** It also implements business logic that triggers other workflows in the system (e.g., send, delete service books). The central database **54** stores system wide data related to sites/carriers, mailbox providers (AOL, Yahoo), service books, devices and user accounts. The partition database **58** is a primary data store for users. It stores data for a fixed set of users. The directory **56** is a system responsible for assigning, locating and distributing users and their associated workloads across service instances. The source assignment manager (SAM) **60** assigns sources to the DA proxy **42** for the purposes of mail detection (polling, subscribing, etc.). The PDS (PWP directory service) **62** is a registry of PWP servers **90** and is responsible for load balancing mail connector (MC) clients across PWP server instances.

Any PWP server **90** and mail connector **92** components are used together to access mailboxes when the system is unable to directly access an external mail source (e.g., source is behind corporate firewall). The Resource Deployment System (RDS) **64** allows the dynamic deployment of new brand and language specific resources.

There are also various UI/web components. The HTML proxy **70** provides an HTML user interface for users to manage their account. The WAP proxy **72** provides a WML and XHTML user interface for users to manage their account. The WEB ADMIN and ADMIN **74** proxy provides an HTML user interface for carriers to perform administrative functions on their customer accounts. A desktop client is deployed via a device CD, and allows the user to integrate sources with a native Win32 UI. A device client allows the user to integrate sources using a java based UI on the device. Provisioning (PRV) **76** can also occur. Also illustrated is the internal SMTP server **77** operative with a database table **78** and associated with the MOP. A source scheduler **94** and IMAP-Idle connection module (manager) **96** are shown and explained in greater detail later.

The worker provides CMIME conversions. It provides an interface for service books and service to device messaging. It performs data compression and encryption. It acts as broker for all message from handheld (MFH) operations. The port agent sits between worker and relay. It balances load across many SRP connections. It routes MFH to correct worker. It provides GME encoding/decoding. It performs data compression and encryption. The attachment server provides document conversion for attachment viewing. The mail store provides storage for hosted email address. It serves as a cache for integrated mailboxes. It utilizes storage area network (SAN) for high throughput. Per mailbox indexes to limit lock contention. It compression configurable to lower network traffic and load on the SAN.

The directory acts as cache for Central DB to reduce load. It provides user directory/location information for user to worker and user to BDA proxy. Look-up is available by hosted email address or PIN. It exposes the LDAP interface for MTA integration. The SAM ensures all sources in its partition are being serviced properly. It loads all sources on start-up and works with directory to initiate polling in the proper BDA proxy. It responds to directory up/down events to reduce reassignment of users. It periodically queries partition DB to identify new/modified sources as a failsafe.

The DA proxy manages polling queue and scheduling. It manages subscriptions for notification based sources. It manages permanent connections to sources supporting IMAP idle. It provides the worker with access to user data and service book state/configuration. It handles message from handheld requests for sending mail, delete and mark read/unread.

The universal proxy provides access to integrated sources via a single common protocol. It supports POP, IMAP, mail connector, Hotmail and Outlook web access. The PWP server provides access to the user's exchange or notes mailbox via mail connector. It acts as rendezvous point between universal proxy and mail connector and proxies HTTP communication with the mail connector. It provides load balancing of sources across PWP server instances. The event server handles HTTP notifications of new mail, etc. from external systems.

The SOAP server minimizes the number of connections to the databases. It provides abstraction to physical location (Central vs Partition) and a schema of data. It implements business logic for notifying components of data changes which can trigger other workflows such as: PIN changes (tell BDA, PDS); Account creation welcome message via BDA; Integrated source add sends service book via BDA; Subscription requests; and similar items. It provides APIs to enable integration with external systems. It implements guessing logic via database rules and engine servlet to allow learning and/or generation of configuration conventions and parameters.

The RDS (Resource Deployment Service) allows new resources to be deployed without shutting down the system: new language bundles, template changes, images, and other items (anything stored on the file system). It allows a package to be created and tested in a test environment and then pushed without change to production.

The WAP proxy is a WML based interface. The HTML proxy is the HTML based interface for desktop based browser access. The REST proxy is the API (XML) based access to support device based client. Significant usability improvements over WML based interface. This is launched as part of the set up wizard. It supports version change detection and OTA upgrades.

The central database contains system wide data and global directory of accounts; site/carrier configuration; mailbox providers (configured and learned); service books; and device information. The partition databases have user account detail, integrated mailbox information, unique message ID's, and map to ID on the device. Some performance related global data is replicated here. Source to service book mappings are stored.

The worker/port agent provides user affinity to an instance of a worker, reduces request rates to DA proxies by caching user data efficiently in the worker, removes the need for the supervisor component, simplifies message flow and reduces request rates to the DA by pushing messages directly to a worker rather than the existing DA -> Supervisor -> Worker -> DA -> Worker model, simplifies and removes race conditions in the existing retry mechanisms, removes Cyrus mail stores and the existing MTA's from the system and replaces them with significantly more efficient alternatives, and reduces load on DA proxies by routing hosted mail directly through the XE engines.

The directory system improves manageability and decreases the complexity of the system by reducing the number of moving parts, eliminates scaling bottlenecks by allowing the directory to scale well past 10 million users in a horizontal fashion while still maintaining the ability to support a large number of users on a single instance, and makes user affinity to a worker possible.

The polling moves Queue management and polling logic from the database/aggcron to the DA Proxy. It reduces scaling bottlenecks and improves vertical scalability in the partition database by significantly reducing contention on the srcmbox table. It improves polling performance by avoiding any potential contention on the srcmbox table via the use of in memory queues. Simplifies and reduces messages flows in the system by eliminating the need for the DA proxy to be told when it is time to poll. It improves vertical scalability of the partition database by reducing the overall query load on the partition databases. It improves user response times by reducing contention and the overall query load on the partition databases. It greatly reduces the fragile nature of the queuing model by eliminating race conditions in that design. It reduces network bandwith by removing the 'double' poll design. It eliminates the 'mailbox locked' problem caused by the 'double' poll design.

FIG. 1A shows a high-level flowchart and illustrating a sequence that can be used in accordance with a non-limiting example. The process starts (block 98a) and is followed by identifying a particular mail server during the account integration process (98b). This can occur during the account integration process using a direct access server comprising a processor and operative with a network engine that communicates with the plurality of user subscribed mobile wireless communications devices via the communications network to send and receive electronic mail. The particular mail server is queried using the command that is supported by the identified particular mail server (block 98c). The configuration parameters are received (block 98d). The configuration parameters are stored to a database (block 98e). The process ends (block 98f).

Further steps include polling the particular mail server when it receives a notification from the particular mail server that new electronic mail has arrived and logging into the particular mail server when it receives a notification from the particular mail server that electronic mail is waiting to be received from the particular mail server. This polling can occur after a predetermined period of time if the direct access server does not receive any notifications. In another example, Simple Mail Transfer Protocol (SMTP) server information relating to the particular mail server is received. In another example, a message from handheld (MFH) is received for the electronic mail that appears to be from the particular mail server when received by a recipient. In another example, a non-mail job is scheduled periodically and refreshes information in the database. It can enable a last updated time stamp.

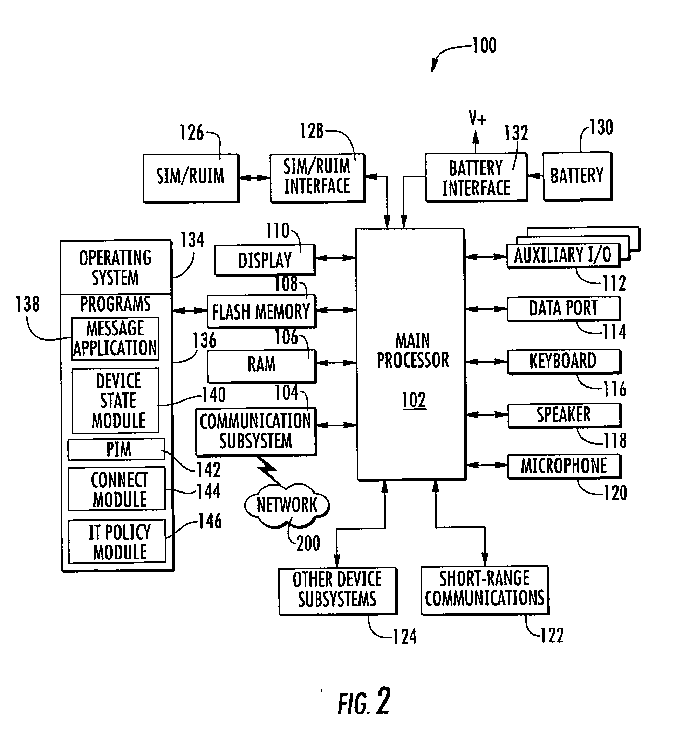

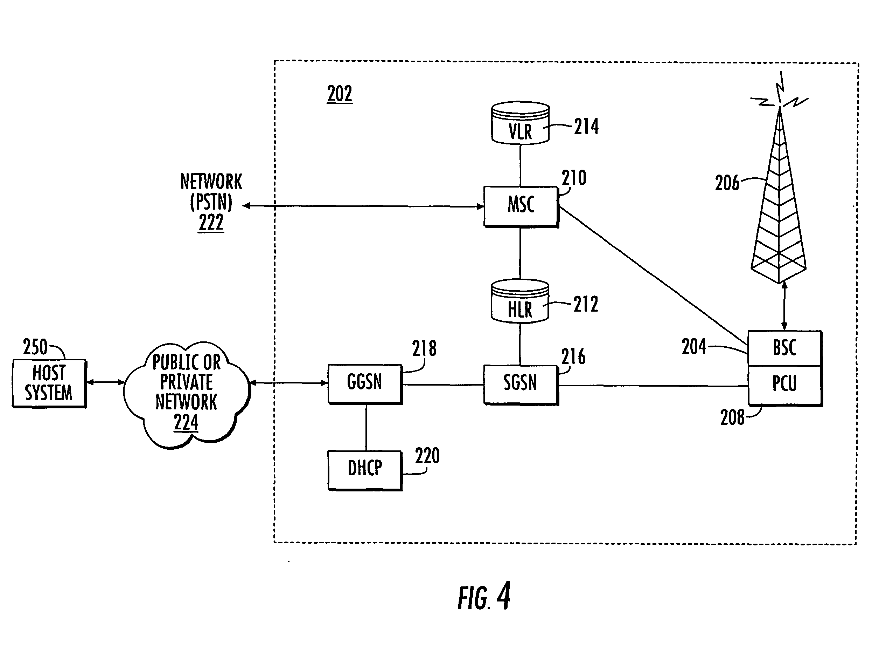

There now follows a description relative to FIGS. 2-5 of an example embodiment of a mobile device, such as a mobile wireless communications device, communication subsystem component of the mobile device, and a node in a wireless network that can be operable with the wireless device and components of a host system for use with the wireless network of FIG. 4 and the mobile device of FIG. 2.

The embodiments described herein generally relate to a mobile wireless communication device, also referred to as a mobile device, which can be configured according to an IT policy. It should be noted that the term IT policy, in general, refers to a collection of IT policy rules, in which the IT policy rules can be defined as being either grouped or non-grouped and global or per-user. The terms grouped, non-grouped, global and per-user are defined further below. Examples of applicable communication devices include pagers, cellular phones, cellular smart-phones, wireless organizers, personal digital assistants, computers, laptops, handheld wireless communication devices, wirelessly enabled notebook computers and the like.

The mobile device is a two-way communication device with advanced data communication capabilities including the capability to communicate with other mobile devices or computer systems through a network of transceiver stations. The mobile device may also have the capability to allow voice communication. Depending on the functionality provided by the mobile device, it may be referred to as a data messaging device, a two-way pager, a cellular telephone with data messaging capabilities, a wireless Internet appliance, or a data communication device (with or without telephony capabilities). To aid the reader in understanding the structure of the mobile device and how it communicates with other devices and host systems, reference will now be made to FIGS. 2-5.

Referring first to FIG. 2, shown therein is a block diagram of an example embodiment of a mobile device **100.** The mobile device **100** includes a number of components such as a main processor **102** that controls the overall operation of the mobile device **100.** Communication functions, including data and voice communications, are performed through a communication subsystem **104.** The communication subsystem **104** receives messages from and sends messages to a wireless network **200.** In this example embodiment of the mobile device **100,** the communication subsystem **104** is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem **104** with the wireless network **200** represents one or more different Radio Frequency (RF) channels, operating according to defined protocols specified for GSM/GPRS communications. With newer network protocols, these channels are capable of supporting both circuit switched voice communications and packet switched data communications.

Although the wireless network **200** associated with mobile device **100** is a GSM/GPRS wireless network in one example implementation, other wireless networks may also be associated with the mobile device **100** in variant implementations. The different types of wireless networks that may be employed include, for example, data-centric wireless networks, voice-centric wireless networks, and dual-mode networks that can support both voice and data communications over the same physical base station. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11, Mobitex^{™} and DataTAC^{™} network communication systems. Examples of other voice-centric data networks include Personal Communication Systems (PCS) networks like GSM and Time Division Multiple Access (TDMA) systems.

The main processor **102** also interacts with additional subsystems such as a Random Access Memory (RAM) **106,** a flash memory **108,** a display **110**, an auxiliary input/output (I/O) subsystem **112,** a data port **114**, a keyboard **116,** a speaker **118,** a microphone **120,** short-range communications **122** and other device subsystems **124.**

Some of the subsystems of the mobile device **100** perform communication-related functions, whereas other subsystems may provide "resident" or on-device functions. By way of example, the display **110** and the keyboard **116** may be used for both communication-related functions, such as entering a text message for transmission over the network **200,** and device-resident functions such as a calculator or task list.

The mobile device **100** can send and receive communication signals over the wireless network **200** after required network registration or activation procedures have been completed. Network access is associated with a subscriber or user of the mobile device **100.** To identify a subscriber, the mobile device 100 requires a SIM/RUIM card **126** (i.e., Subscriber Identity Module or a Removable User Identity Module) to be inserted into a SIM/RUIM interface **128** in order to communicate with a network. The SIM card or RUIM **126** is one type of a conventional "smart card" that can be used to identify a subscriber of the mobile device **100** and to personalize the mobile device **100,** among other things. Without the SIM card **126,** the mobile device **100** is not fully operational for communication with the wireless network **200.** By inserting the SIM card/RUIM 126 into the SIM/RUIM interface **128,** a subscriber can access all subscribed services. Services may include: web browsing and messaging such as email, voice mail, Short Message Service (SMS), and Multimedia Messaging Services (MMS). More advanced services may include: point of sale, field service and sales force automation. The SIM card/RUIM **126** includes a processor and memory for storing information. Once the SIM card/RUIM **126** is inserted into the SIM/RUIM interface **128,** it is coupled to the main processor **102.** In order to identify the subscriber, the SIM card/RUIM **126** can include some user parameters such as an International Mobile Subscriber Identity (IMSI). An advantage of using the SIM card/RUIM **126** is that a subscriber is not necessarily bound by any single physical mobile device. The SIM card/RUIM **126** may store additional subscriber information for a mobile device as well, including datebook (or calendar) information and recent call information. Alternatively, user identification information can also be programmed into the flash memory **108.**

The mobile device **100** is a battery-powered device and includes a battery interface **132** for receiving one or more rechargeable batteries **130.** In at least some embodiments, the battery **130** can be a smart battery with an embedded microprocessor. The battery interface **132** is coupled to a regulator (not shown), which assists the battery **130** in providing power V+ to the mobile device **100.** Although current technology makes use of a battery, future technologies such as micro fuel cells may provide the power to the mobile device **100.**

The mobile device **100** also includes an operating system **134** and software components **136** to **146** which are described in more detail below. The operating system 134 and the software components **136** to **146** that are executed by the main processor **102** are typically stored in a persistent store such as the flash memory **108,** which may alternatively be a read-only memory (ROM) or similar storage element (not shown). Those skilled in the art will appreciate that portions of the operating system **134** and the software components **136** to **146,** such as specific device applications, or parts thereof, may be temporarily loaded into a volatile store such as the RAM **106.** Other software components can also be included, as is well known to those skilled in the art.

The subset of software applications **136** that control basic device operations, including data and voice communication applications, will normally be installed on the mobile device **100** during its manufacture. Other software applications include a message application **138** that can be any suitable software program that allows a user of the mobile device **100** to send and receive electronic messages. Various alternatives exist for the message application **138** as is well known to those skilled in the art. Messages that have been sent or received by the user are typically stored in the flash memory **108** of the mobile device **100** or some other suitable storage element in the mobile device **100.** In at least some embodiments, some of the sent and received messages may be stored remotely from the device **100** such as in a data store of an associated host system that the mobile device **100** communicates with.

The software applications can further include a device state module **140,** a Personal Information Manager (PIM) **142,** and other suitable modules (not shown). The device state module **140** provides persistence, i.e., the device state module **140** ensures that important device data is stored in persistent memory, such as the flash memory **108,** so that the data is not lost when the mobile device **100** is turned off or loses power.

The PIM **142** includes functionality for organizing and managing data items of interest to the user, such as, but not limited to, email, contacts, calendar events, voice mails, appointments, and task items. A PIM application has the ability to send and receive data items via the wireless network **200.** PIM data items may be seamlessly integrated, synchronized, and updated via the wireless network **200** with the mobile device subscriber's corresponding data items stored and/or associated with a host computer system. This functionality creates a mirrored host computer on the mobile device **100** with respect to such items. This can be particularly advantageous when the host computer system is the mobile device subscriber's office computer system.

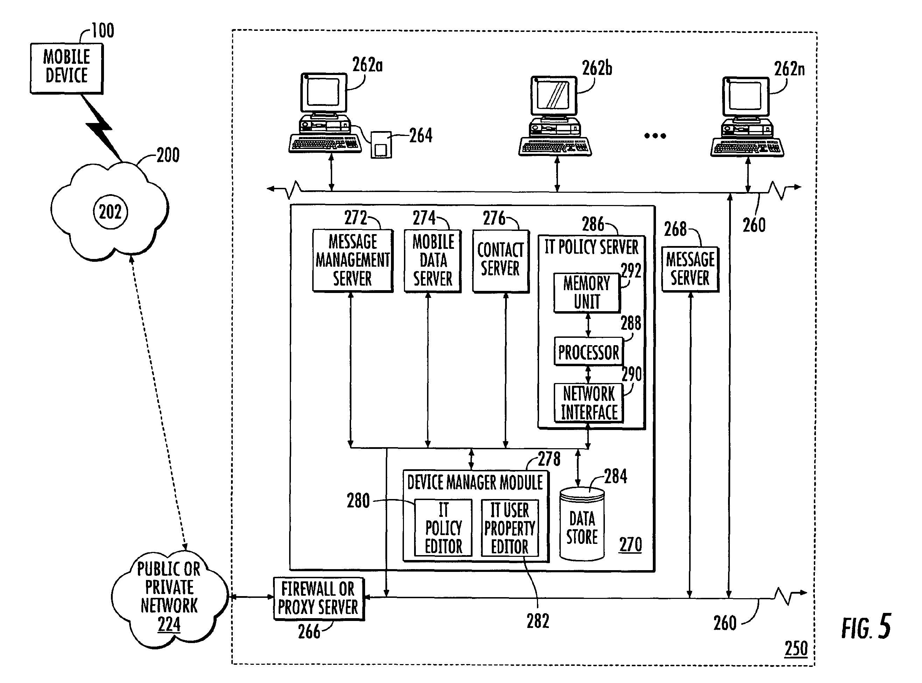

The mobile device **100** also includes a connect module **144,** and an IT policy module **146.** The connect module **144** implements the communication protocols that are required for the mobile device **100** to communicate with the wireless infrastructure and any host system, such as an enterprise system, that the mobile device **100** is authorized to interface with. Examples of a wireless infrastructure and an enterprise system are given in FIGS. 4 and 5, which are described in more detail below.

The connect module **144** includes a set of APIs that can be integrated with the mobile device **100** to allow the mobile device **100** to use any number of services associated with the enterprise system. The connect module **144** allows the mobile device **100** to establish an end-to-end secure, authenticated communication pipe with the host system. A subset of applications for which access is provided by the connect module **144** can be used to pass IT policy commands from the host system to the mobile device **100.** This can be done in a wireless or wired manner. These instructions can then be passed to the IT policy module **146** to modify the configuration of the device **100.** Alternatively, in some cases, the IT policy update can also be done over a wired connection.

The IT policy module **146** receives IT policy data that encodes the IT policy. The IT policy module **146** then ensures that the IT policy data is authenticated by the mobile device **100.** The IT policy data can then be stored in the flash memory **106** in its native form. After the IT policy data is stored, a global notification can be sent by the IT policy module **146** to all of the applications residing on the mobile device **100.** Applications for which the IT policy may be applicable then respond by reading the IT policy data to look for IT policy rules that are applicable.

The IT policy module **146** can include a parser (not shown), which can be used by the applications to read the IT policy rules. In some cases, another module or application can provide the parser. Grouped IT policy rules, described in more detail below, are retrieved as byte streams, which are then sent (recursively, in a sense) into the parser to determine the values of each IT policy rule defined within the grouped IT policy rule. In at least some embodiments, the IT policy module **146** can determine which applications are affected by the IT policy data and send a notification to only those applications. In either of these cases, for applications that aren't running at the time of the notification, the applications can call the parser or the IT policy module **146** when they are executed to determine if there are any relevant IT policy rules in the newly received IT policy data.

All applications that support rules in the IT Policy are coded to know the type of data to expect. For example, the value that is set for the "WEP User Name" IT policy rule is known to be a string; therefore the value in the IT policy data that corresponds to this rule is interpreted as a string. As another example, the setting for the "Set Maximum Password Attempts" IT policy rule is known to be an integer, and therefore the value in the IT policy data that corresponds to this rule is interpreted as such.

After the IT policy rules have been applied to the applicable applications or configuration files, the IT policy module **146** sends an acknowledgement back to the host system to indicate that the IT policy data was received and successfully applied.

Other types of software applications can also be installed on the mobile device **100.** These software applications can be third party applications, which are added after the manufacture of the mobile device **100.** Examples of third party applications include games, calculators, utilities, etc.

The additional applications can be loaded onto the mobile device **100** through at least one of the wireless network **200,** the auxiliary I/O subsystem **112,** the data port 114, the short-range communications subsystem **122,** or any other suitable device subsystem **124.** This flexibility in application installation increases the functionality of the mobile device **100** and may provide enhanced on-device functions, communication-related functions, or both. For example, secure communication applications may enable electronic commerce functions and other such financial transactions to be performed using the mobile device **100.**

The data port **114** enables a subscriber to set preferences through an external device or software application and extends the capabilities of the mobile device **100** by providing for information or software downloads to the mobile device **100** other than through a wireless communication network. The alternate download path may, for example, be used to load an encryption key onto the mobile device **100** through a direct and thus reliable and trusted connection to provide secure device communication.

The data port **114** can be any suitable port that enables data communication between the mobile device **100** and another computing device. The data port **114** can be a serial or a parallel port. In some instances, the data port **114** can be a USB port that includes data lines for data transfer and a supply line that can provide a charging current to charge the battery **130** of the mobile device **100.**

The short-range communications subsystem **122** provides for communication between the mobile device **100** and different systems or devices, without the use of the wireless network **200.** For example, the subsystem **122** may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an email message, or web page download will be processed by the communication subsystem **104** and input to the main processor **102.** The main processor **102** will then process the received signal for output to the display **110** or alternatively to the auxiliary I/O subsystem **112.** A subscriber may also compose data items, such as email messages, for example, using the keyboard **116** in conjunction with the display **110** and possibly the auxiliary I/O subsystem **112.** The auxiliary subsystem **112** may include devices such as: a touch screen, mouse, track ball, infrared fingerprint detector, or a roller wheel with dynamic button pressing capability. The keyboard **116** is preferably an alphanumeric keyboard and/or telephone-type keypad. However, other types of keyboards may also be used. A composed item may be transmitted over the wireless network **200** through the communication subsystem **104.**

For voice communications, the overall operation of the mobile device **100** is substantially similar, except that the received signals are output to the speaker **118,** and signals for transmission are generated by the microphone **120.** Alternative voice or audio I/O subsystems, such as a voice message recording subsystem, can also be implemented on the mobile device **100.** Although voice or audio signal output is accomplished primarily through the speaker **118**, the display **110** can also be used to provide additional information such as the identity of a calling party, duration of a voice call, or other voice call related information.

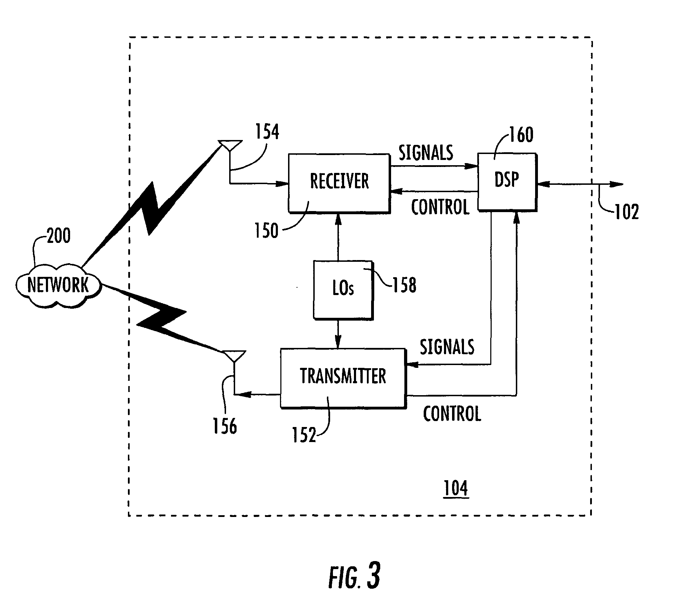

Referring now to FIG. 3, an example block diagram of the communication subsystem component **104** is shown. The communication subsystem **104** includes a receiver **150,** a transmitter **152,** as well as associated components such as one or more embedded or internal antenna elements **154** and **156,** Local Oscillators (LOs) **158,** and a processing module such as a Digital Signal Processor (DSP) **160.** The particular design of the communication subsystem **104** is dependent upon the communication network **200** with which the mobile device **100** is intended to operate. Thus, it should be understood that the design illustrated in FIG. 3 serves only as one example.

Signals received by the antenna **154** through the wireless network **200** are input to the receiver **150,** which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP **160.** In a similar manner, signals to be transmitted are processed, including modulation and encoding, by the DSP **160.** These DSP-processed signals are input to the transmitter **152** for digital-to-analog (D/A) conversion, frequency up conversion, filtering, amplification and transmission over the wireless network **200** via the antenna **156.** The DSP **160** not only processes communication signals, but also provides for receiver and transmitter control. For example, the gains applied to communication signals in the receiver **150** and the transmitter **152** may be adaptively controlled through automatic gain control algorithms implemented in the DSP **160.**

The wireless link between the mobile device **100** and the wireless network **200** can contain one or more different channels, typically different RF channels, and associated protocols used between the mobile device **100** and the wireless network **200.** An RF channel is a limited resource that must be conserved, typically due to limits in overall bandwidth and limited battery power of the mobile device **100.**

When the mobile device **100** is fully operational, the transmitter **152** is typically keyed or turned on only when it is transmitting to the wireless network **200** and is otherwise turned off to conserve resources. Similarly, the receiver 150 is periodically turned off to conserve power until it is needed to receive signals or information (if at all) during designated time periods.

Referring now to FIG. 4, a block diagram of an example implementation of a node **202** of the wireless network **200** is shown. In practice, the wireless network **200** includes one or more nodes **202.** In conjunction with the connect module **144,** the mobile device **100** can communicate with the node **202** within the wireless network **200.** In the example implementation of FIG. 3, the node **202** is configured in accordance with General Packet Radio Service (GPRS) and Global Systems for Mobile (GSM) technologies. The node 202 includes a base station controller (BSC) **204** with an associated tower station **206,** a Packet Control Unit (PCU) **208** added for GPRS support in GSM, a Mobile Switching Center (MSC) **210,** a Home Location Register (HLR) **212,** a Visitor Location Registry (VLR) **214,** a Serving GPRS Support Node (SGSN) **216,** a Gateway GPRS Support Node (GGSN) **218,** and a Dynamic Host Configuration Protocol (DHCP) **220.** This list of components is not meant to be an exhaustive list of the components of every node **202** within a GSM/GPRS network, but rather a list of components that are commonly used in communications through the network **200.**

In a GSM network, the MSC **210** is coupled to the BSC **204** and to a landline network, such as a Public Switched Telephone Network (PSTN) **222** to satisfy circuit switched requirements. The connection through the PCU **208,** the SGSN **216** and the GGSN **218** to a public or private network (Internet) **224** (also referred to herein generally as a shared network infrastructure) represents the data path for GPRS capable mobile devices. In a GSM network extended with GPRS capabilities, the BSC **204** also contains the Packet Control Unit (PCU) **208** that connects to the SGSN **216** to control segmentation, radio channel allocation and to satisfy packet switched requirements. To track the location of the mobile device **100** and availability for both circuit switched and packet switched management, the HLR **212** is shared between the MSC **210** and the SGSN **216.** Access to the VLR **214** is controlled by the MSC **210.**

The station **206** is a fixed transceiver station and together with the BSC **204** form fixed transceiver equipment. The fixed transceiver equipment provides wireless network coverage for a particular coverage area commonly referred to as a "cell." The fixed transceiver equipment transmits communication signals to and receives communication signals from mobile devices within its cell via the station **206.** The fixed transceiver equipment normally performs such functions as modulation and possibly encoding and/or encryption of signals to be transmitted to the mobile device **100** in accordance with particular, usually predetermined, communication protocols and parameters, under control of its controller. The fixed transceiver equipment similarly demodulates and possibly decodes and decrypts, if necessary, any communication signals received from the mobile device **100** within its cell. Communication protocols and parameters may vary between different nodes. For example, one node may employ a different modulation scheme and operate at different frequencies than other nodes.

For all mobile devices **100** registered with a specific network, permanent configuration data such as a user profile is stored in the HLR **212.** The HLR **212** also contains location information for each registered mobile device and can be queried to determine the current location of a mobile device. The MSC **210** is responsible for a group of location areas and stores the data of the mobile devices currently in its area of responsibility in the VLR **214.** Further, the VLR 214 also contains information on mobile devices that are visiting other networks. The information in the VLR **214** includes part of the permanent mobile device data transmitted from the HLR **212** to the VLR **214** for faster access. By moving additional information from a remote HLR **212** node to the VLR **214,** the amount of traffic between these nodes can be reduced so that voice and data services can be provided with faster response times and at the same time requiring less use of computing resources.

The SGSN **216** and the GGSN **218** are elements added for GPRS support, namely packet switched data support, within GSM. The SGSN **216** and the MSC **210** have similar responsibilities within the wireless network **200** by keeping track of the location of each mobile device **100.** The SGSN **216** also performs security functions and access control for data traffic on the wireless network **200.** The GGSN **218** provides internetworking connections with external packet switched networks and connects to one or more SGSN's **216** via an Internet Protocol (IP) backbone network operated within the network **200.** During normal operations, a given mobile device **100** must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server **220** connected to the GGSN **218.** There are many mechanisms for dynamic IP assignment, including using a combination of a Remote Authentication Dial-In User Service (RADIUS) server and a DHCP server. Once the GPRS Attach is complete, a logical connection is established from a mobile device **100,** through the PCU **208,** and the SGSN **216** to an Access Point Node (APN) within the GGSN **218.** The APN represents a logical end of an IP tunnel that can either access direct Internet compatible services or private network connections. The APN also represents a security mechanism for the network 200, insofar as each mobile device **100** must be assigned to one or more APNs and mobile devices **100** cannot exchange data without first performing a GPRS Attach to an APN that it has been authorized to use. The APN may be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network **200.** To maximize use of the PDP Contexts, the network **200** will run an idle timer for each PDP Context to determine if there is a lack of activity. When a mobile device **100** is not using its PDP Context, the PDP Context can be de-allocated and the IP address returned to the IP address pool managed by the DHCP server **220.**

Referring now to FIG. 5, shown therein is a block diagram illustrating components of an example configuration of a host system **250** that the mobile device **100** can communicate with in conjunction with the connect module **144.** The host system **250** will typically be a corporate enterprise or other local area network (LAN), but may also be a home office computer or some other private system, for example, in variant implementations. In this example shown in FIG. 5, the host system **250** is depicted as a LAN of an organization to which a user of the mobile device **100** belongs. Typically, a plurality of mobile devices can communicate wirelessly with the host system **250** through one or more nodes **202** of the wireless network **200.**

The host system **250** includes a number of network components connected to each other by a network **260.** For instance, a user's desktop computer **262a** with an accompanying cradle 264 for the user's mobile device **100** is situated on a LAN connection. The cradle **264** for the mobile device 100 can be coupled to the computer **262a** by a serial or a Universal Serial Bus (USB) connection, for example. Other user computers **262b-262n** are also situated on the network **260,** and each may or may not be equipped with an accompanying cradle **264.** The cradle **264** facilitates the loading of information (e.g., PIM data, private symmetric encryption keys to facilitate secure communications) from the user computer **262a** to the mobile device **100,** and may be particularly useful for bulk information updates often performed in initializing the mobile device **100** for use. The information downloaded to the mobile device **100** may include certificates used in the exchange of messages.

It will be understood by persons skilled in the art that the user computers **262a-262n** will typically also be connected to other peripheral devices, such as printers, etc. which are not explicitly shown in FIG. 5. Furthermore, only a subset of network components of the host system **250** are shown in FIG. 4 for ease of exposition, and it will be understood by persons skilled in the art that the host system **250** will include additional components that are not explicitly shown in FIG. 4 for this example configuration. More generally, the host system **250** may represent a smaller part of a larger network (not shown) of the organization, and may include different components and/or be arranged in different topologies than that shown in the example embodiment of FIG. 5.

To facilitate the operation of the mobile device **100** and the wireless communication of messages and message-related data between the mobile device **100** and components of the host system **250,** a number of wireless communication support components **270** can be provided. In some implementations, the wireless communication support components **270** can include a message management server **272,** a mobile data server **274,** a contact server **276,** and a device manager module **278.** The device manager module **278** includes an IT Policy editor **280** and an IT user property editor **282,** as well as other software components for allowing an IT administrator to configure the mobile devices **100.** In an alternative embodiment, there may be one editor that provides the functionality of both the IT policy editor **280** and the IT user property editor **282.** The support components **270** also include a data store **284,** and an IT policy server **286.** The IT policy server 286 includes a processor **288,** a network interface 290 and a memory unit **292.** The processor **288** controls the operation of the IT policy server **286** and executes functions related to the standardized IT policy as described below. The network interface 290 allows the IT policy server **286** to communicate with the various components of the host system **250** and the mobile devices **100.** The memory unit **292** can store functions used in implementing the IT policy as well as related data. Those skilled in the art know how to implement these various components. Other components may also be included as is well known to those skilled in the art. Further, in some implementations, the data store **284** can be part of any one of the servers.

In this example embodiment, the mobile device **100** communicates with the host system **250** through node **202** of the wireless network **200** and a shared network infrastructure **224** such as a service provider network or the public Internet. Access to the host system **250** may be provided through one or more routers (not shown), and computing devices of the host system **250** may operate from behind a firewall or proxy server **266.** The proxy server **266** provides a secure node and a wireless internet gateway for the host system **250.** The proxy server **266** intelligently routes data to the correct destination server within the host system **250.**

In some implementations, the host system **250** can include a wireless VPN router (not shown) to facilitate data exchange between the host system **250** and the mobile device **100.** The wireless VPN router allows a VPN connection to be established directly through a specific wireless network to the mobile device **100.** The wireless VPN router can be used with the Internet Protocol (IP) Version 6 (IPV6) and IP-based wireless networks. This protocol can provide enough IP addresses so that each mobile device has a dedicated IP address, making it possible to push information to a mobile device at any time. An advantage of using a wireless VPN router is that it can be an off-the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the mobile device 100 in this alternative implementation.

Messages intended for a user of the mobile device **100** are initially received by a message server **268** of the host system **250.** Such messages may originate from any number of sources. For instance, a message may have been sent by a sender from the computer **262b** within the host system **250,** from a different mobile device (not shown) connected to the wireless network **200** or a different wireless network, or from a different computing device, or other device capable of sending messages, via the shared network infrastructure **224,** possibly through an application service provider (ASP) or Internet service provider (ISP), for example.

The message server **268** typically acts as the primary interface for the exchange of messages, particularly email messages, within the organization and over the shared network infrastructure **224.** Each user in the organization that has been set up to send and receive messages is typically associated with a user account managed by the message server **268.** Some example implementations of the message server **268** include a Microsoft Exchange^{™} server, a Lotus Domino^{™} server, a Novell Groupwise^{™} server, or another suitable mail server installed in a corporate environment. In some implementations, the host system **250** may include multiple message servers **268**. The message server **268** may also be adapted to provide additional functions beyond message management, including the management of data associated with calendars and task lists, for example.

When messages are received by the message server **268,** they are typically stored in a data store associated with the message server **268.** In at least some embodiments, the data store may be a separate hardware unit, such as data store **284,** that the message server **268** communicates with. Messages can be subsequently retrieved and delivered to users by accessing the message server **268.** For instance, an email client application operating on a user's computer **262a** may request the email messages associated with that user's account stored on the data store associated with the message server **268.** These messages are then retrieved from the data store and stored locally on the computer **262a.** The data store associated with the message server **268** can store copies of each message that is locally stored on the mobile device **100.** Alternatively, the data store associated with the message server **268** can store all of the messages for the user of the mobile device **100** and only a smaller number of messages can be stored on the mobile device **100** to conserve memory. For instance, the most recent messages (i.e., those received in the past two to three months for example) can be stored on the mobile device **100.**

When operating the mobile device **100,** the user may wish to have email messages retrieved for delivery to the mobile device **100.** The message application **138** operating on the mobile device **100** may also request messages associated with the user's account from the message server **268.** The message application **138** may be configured (either by the user or by an administrator, possibly in accordance with an organization's information technology (IT) policy) to make this request at the direction of the user, at some pre-defined time interval, or upon the occurrence of some pre-defined event. In some implementations, the mobile device 100 is assigned its own email address, and messages addressed specifically to the mobile device **100** are automatically redirected to the mobile device **100** as they are received by the message server **268.**

The message management server **272** can be used to specifically provide support for the management of messages, such as email messages, that are to be handled by mobile devices. Generally, while messages are still stored on the message server **268,** the message management server **272** can be used to control when, if, and how messages are sent to the mobile device **100.** The message management server **272** also facilitates the handling of messages composed on the mobile device **100,** which are sent to the message server **268** for subsequent delivery.

For example, the message management server **272** may monitor the user's "mailbox" (e.g., the message store associated with the user's account on the message server **268)** for new email messages, and apply user-definable filters to new messages to determine if and how the messages are relayed to the user's mobile device **100.** The message management server **272** may also compress and encrypt new messages (e.g., using an encryption technique such as Data Encryption Standard (DES), Triple DES, or Advanced Encryption Standard (AES)) and push them to the mobile device **100** via the shared network infrastructure **224** and the wireless network 200. The message management server **272** may also receive messages composed on the mobile device **100** (e.g., encrypted using Triple DES), decrypt and decompress the composed messages, re-format the composed messages if desired so that they will appear to have originated from the user's computer **262a**, and re-route the composed messages to the message server 268 for delivery.

Certain properties or restrictions associated with messages that are to be sent from and/or received by the mobile device **100** can be defined (e.g., by an administrator in accordance with IT policy) and enforced by the message management server **272.** These may include whether the mobile device **100** may receive encrypted and/or signed messages, minimum encryption key sizes, whether outgoing messages must be encrypted and/or signed, and whether copies of all secure messages sent from the mobile device **100** are to be sent to a pre-defined copy address, for example.

The message management server **272** may also be adapted to provide other control functions, such as only pushing certain message information or pre-defined portions (e.g., "blocks") of a message stored on the message server **268** to the mobile device **100.** For example, in some cases, when a message is initially retrieved by the mobile device **100** from the message server **268,** the message management server **272** may push only the first part of a message to the mobile device **100,** with the part being of a pre-defined size (e.g., 2 KB). The user can then request that more of the message be delivered in similar-sized blocks by the message management server **272** to the mobile device **100,** possibly up to a maximum predefined message size. Accordingly, the message management server **272** facilitates better control over the type of data and the amount of data that is communicated to the mobile device **100,** and can help to minimize potential waste of bandwidth or other resources.

The mobile data server **274** encompasses any other server that stores information that is relevant to the corporation. The mobile data server **274** may include, but is not limited to, databases, online data document repositories, customer relationship management (CRM) systems, or enterprise resource planning (ERP) applications.

The contact server **276** can provide information for a list of contacts for the user in a similar fashion as the address book on the mobile device **100.** Accordingly, for a given contact, the contact server **276** can include the name, phone number, work address and email address of the contact, among other information. The contact server **276** can also provide a global address list that contains the contact information for all of the contacts associated with the host system **250.**

It will be understood by persons skilled in the art that the message management server **272,** the mobile data server **274,** the contact server **276,** the device manager module **278,** the data store **284** and the IT policy server **286** do not need to be implemented on separate physical servers within the host system **250.** For example, some or all of the functions associated with the message management server **272** may be integrated with the message server **268,** or some other server in the host system **250.** Alternatively, the host system **250** may include multiple message management servers **272,** particularly in variant implementations where a large number of mobile devices need to be supported.

Alternatively, in some embodiments, the IT policy server **286** can provide the IT policy editor **280,** the IT user property editor **282** and the data store **284.** In some cases, the IT policy server **286** can also provide the device manager module **278.** The processor **288** of the IT policy server **286** can be used to perform the various steps of a method for providing IT policy data that is customizable on a per-user basis. The processor **288** can execute the editors **280** and **282.** In some cases, the functionality of the editors **280** and **282** can be provided by a single editor. In some cases, the memory unit 292 can provide the data store **284.**

The device manager module **278** provides an IT administrator with a graphical user interface with which the IT administrator interacts to configure various settings for the mobile devices **100.** As mentioned, the IT administrator can use IT policy rules to define behaviors of certain applications on the mobile device **100** that are permitted such as phone, web browser or Instant Messenger use. The IT policy rules can also be used to set specific values for configuration settings that an organization requires on the mobile devices 100 such as auto signature text, WLAN/VoIP/VPN configuration, security requirements (e.g., encryption algorithms, password rules, etc.), specifying themes or applications that are allowed to run on the mobile device **100,** and the like.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A communications system, comprising:
a network engine that communicates with a plurality of user subscribed mobile wireless communications devices via a communications network and configured to send and receive electronic mail therefrom; and
a direct access server comprising a processor and operative with the network engine and comprising at least one module configured to identify a particular mail server during an account integration process, query the particular mail server using a command that is supported by the particular mail server and receive from the particular mail server configuration parameters, and a database to which the returned configuration parameters are stored and used to subscribe to the particular mail server.

2. The communications system according to Claim 1, wherein said direct access server is configured to poll the particular mail server when it receives a notification from the particular mail server that new electronic mail has arrived.

3. The communications system according to Claim 1, wherein said direct access server is configured to log into the particular mail server when it receives a notification from the particular mail server that electronic mail is waiting to be received from the particular mail server.

4. The communications system according to Claim 1, wherein if the direct access server does not receive any notification, the direct access server is configured to poll the particular mail server only after a predetermined period of time.

5. The communications system according to Claim 1, wherein said direct access server is configured to receive Simple Mail Transfer Protocol (SMTP) server information relating to the particular mail server.

6. The communications system according to Claim 1, wherein any message from handheld (MFH) electronic mail as received and later sent from said network engine will appear to be from said particular mail server when received by a recipient.

7. The communications system according to Claim 1, and further comprising an application programming interface associated with the particular mail server and configured to receive user data when information regarding the particular mail server needs to change.

8. The communications system according to Claim 1, wherein said direct access server is configured to schedule periodically a non-mail job that refreshes information in the database.

9. The communications system according to Claim 1, wherein said direct access server is configured to enable a last updated timestamp.

10. A communications method, comprising:
identifying a particular mail server during an account integration process in a direct access server comprising a processor and operative with a network engine that communicates with a plurality of user subscribed mobile wireless communications devices via a communications network to send and receive electronic mail;
querying the particular mail server using a command that is supported by the identified particular mail server and receiving configuration parameters that are used; and
storing the configuration parameters to a database.

11. The method according to Claim 10, and further comprising polling the particular mail server when it receives a notification from the particular mail server that new electronic mail has arrived.

12. The method according to Claim 10, and further comprising polling the particular mail server only after a predetermined period of time if the direct access server does not receive any notification.

13. The method according to Claim 10, and further comprising an application programming interface associated with the particular mail server and configured to receive user data when information regarding the particular mail server needs to change.

14. The method according to Claim 10, and further comprising scheduling periodically a non-mail job that refreshes information in the database.

15. The method according to Claim 10, configuring to enable a last updated timestamp.
